# EUROPEAN PATENT SPECIFICATION

(11) **EP 2 681 664 B1**
(45) Date of publication and mention of the grant of the patent: **29.08.2018**
(21) Application number: 12752200.1
(22) Date of filing: 23.02.2012
(51) Int. Cl.: G06F 17/30

(54) **BROWSING METHOD, DEVICE, AND COMPUTER-READABLE STORAGE MEDIUM**
SUCHVERFAHREN UND -VORRICHTUNG SOWIE COMPUTERLESBARES SPEICHERMEDIUM
PROCÉDÉ DE NAVIGATION, DISPOSITIF ET SUPPORT D'INFORMATIONS LISIBLE PAR UN ORDINATEUR

(30) Priority: 02.03.2011 KR 20110018462
(43) Date of publication of application: 08.01.2014
(73) Proprietor: Samsung Electronics Co., Ltd., Suwon-si, Gyeonggi-do, 443-742 (KR)
(72) Inventor: SEO, Hyung-jin, Hwaseong-si Gyeonggi-do 445-733 (KR)
(74) Representative: Appleyard Lees IP LLP
(86) International application number: PCT/KR2012/001370
(87) International publication number: WO 2012/118296

(56) References cited:
- WO-A2-2007/038344
- KR-A- 20020 045 883
- KR-A- 20020 045 883
- KR-A- 20090 024 509
- US-A1- 2005 027 823
- US-A1- 2007 124 474
- US-A1- 2007 124 474
- US-A1- 2008 305 742
- US-B2- 7 739 658
- US-B2- 7 739 658

## Description

### [Technical Field]

The present invention relates generally to browsing methods, and more particularly, to a browsing method with respect to a device not equipped with any browser engine, a device for performing the browsing method, and an associated computer-readable storage medium.

### [Background Art]

A browser engine, which is an engine component of a browser application that analyzes and renders contents in a mark-up language, requires a large memory capacity to operate. Accordingly, it is difficult to install such a browser engine in devices having small a memory capacity, such as a remote control.

US2005/027823 discloses a server-based browser system.

US 2008/305742 discloses an interface for a PDA and corresponding device.

US 2007/124474 discloses a multi-user display proxy server.

### [Disclosure of Invention]

### [Solution to Problem]

The invention is set out in claims 1, 8 and 9.

### [Advantageous Effects of Invention]

According to the above embodiments, it is possible to perform browsing in a device not equipped with any browser engine.

### [Brief Description of Drawings]

The above and other features and advantages of the present invention will become more apparent by describing in detail embodiments thereof with reference to the attached drawings in which:
FIG. 1 is a diagram illustrating devices communicating to perform a browsing method, according to an embodiment of the present invention;
FIG. 2 is a functional block diagram of the first device of FIG. 1 according to an embodiment of the present invention;
FIG. 3A to 3E are diagrams illustrating interactions, with respect to their browsing screens, between first and second devices of FIG. 1 according to embodiments of the present invention;
FIG. 4 is a diagram illustrating a flowchart of a browsing method performed in the first device of FIG. 1, according to an embodiment of the present invention;
FIG. 5 is a diagram illustrating a flowchart of a browsing method performed in the first device of FIG. 1, according to another embodiment of the present invention;
FIG. 6 is a block diagram of the second device of FIG. 1 according to an embodiment of the present invention;
FIG. 7 is a diagram illustrating a flowchart of a browsing method performed in the second device of FIG. 1, according to an embodiment of the present invention; and
FIG. 8 is a diagram illustrating a flowchart of a browsing method performed in the second device of FIG. 1, according to another embodiment of the present invention.

### [Mode for Invention]

Embodiments of the present invention will now be described with reference to accompanying drawings. Like numerals throughout the drawings indicate like elements.

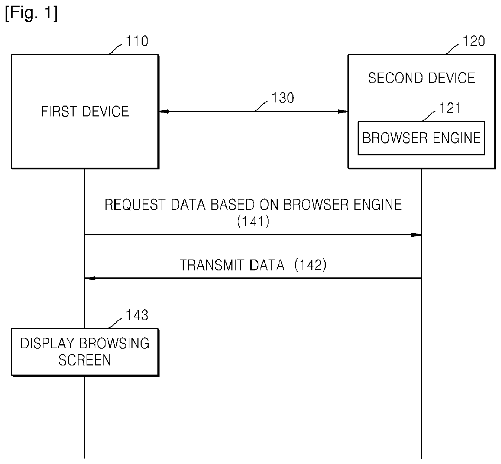

FIG. 1 illustrates two devices communicating in order to perform a browsing method according to an embodiment of the present invention.

The first device 110, which is not equipped with a browser engine, controls the second device 120. The browser engine may conduct parsing and rendering of data in a markup language, which are required by a browser application, such as, Internet Explorer(IE), Chrome, Safari, FireFox, etc. In order to conduct parsing and referring, the browser engine receives and parses data from a Uniform Resource Locator (URL) input through an address bar of such a browser application, generates a data structure, and configures a rendering tree based on the generated data structure. Screens provided by the browser engine, which viewable to a user, are the results of the rendering tree created based on a data tree (e.g., a Document Object Model (DOM)) that reconfigures numerous markup languages.

The first device 110 may be an electronic device such as a remote controller, a portable device, or a mobile device, etc.

The second device 120 is equipped with a browser engine 121 and is controlled by the first device 110. The second device 120 may be an electronic devices, such as a device with a broadcasting receiver, a television, an Internet Protocol Television (IPTV), an IPTV set-top box, a personal computer (PC), a mobile device, a digital camera, or a digital photo frame, etc. Such a mobile device may be a portable device including a cell phone, a smartphone, a Personal Digital Assistant (PDA), a Portable Multimedia Player (PMP), a navigating device, or a gaming console. Such an IPTV may also be incorporated into a mobile device. Herein, an IPTV may also be referred to as a digital broadcasting device. The first and second devices 110 and 120 may have different display standards and/or input schemes. Accordingly, the first and second devices 110 and 120 may be configured to transmit and receive data according to a protocol that can support different standards between the devices 110 and 120.

A communication link 130 between the first and second devices 110 and 120 may be a wired and/or wireless communication link. In the case of a wireless link, the communication link 130 may enable short-range or local area communications according to a wireless protocol, such as, Zigbee, Wi-Fi, Bluetooth, Institute of Electrical and Electronics Engineers (IEEE) 802.11, Home Radio Frequency (HomeRF), Infrared Data Association (IrDA), Ultra Wideband (UWB), and wireless 1394, but is not limited thereto. When the user of the first device 110 requests, from the second device 120, data based on the browser engine 121, in step 141, the second device 120 transmits the data generated by controlling the browser engine 121 to the first device 110 in step 142. Accordingly, the first device 110 displays a browsing screen based on the received data from the second device 120 in step 143.

The first device 110, second device 120, and communication link 130 are configured to transmit and receive data according to a lightweight protocol, such as, an X protocol. More specifically, both the request in step 141 and the response in step 142 occur in the lightweight protocol, such as, the X protocol. Transmission of data in the lightweight protocol allows the amount of data for transmission to be reduced compared to transmitting raw data or compressed data. For example, when transmitting data according to the lightweight protocol in response to a request for data for displaying a red square box having dimensions of 200 x 200 pixels in the top leftmost corner of a screen, the data for transmission may be in a format, such as, "draw(0, 0, 200, 200, FF0000)", which is an example of data formatted according to the lightweight protocol, which can be understood by graphic and/or event proxies used in the first and second devices 110 and 120. In the format of "draw(0, 0, 200, 200, FF0000)", the first element '0'is information regarding a leftmost position of the screen, the second element '0'is information regarding a top position of the screen, next two elements '200, 200'are information regarding the number of horizontal pixels and vertical pixels, respectively, and the last element 'FF0000' is information regarding a red screen color.

Herein, the first device 110 may be referred to as an external device with respect to the second device 120, and the second device 120 may also be referred to as an external device with respect to the first device 110.

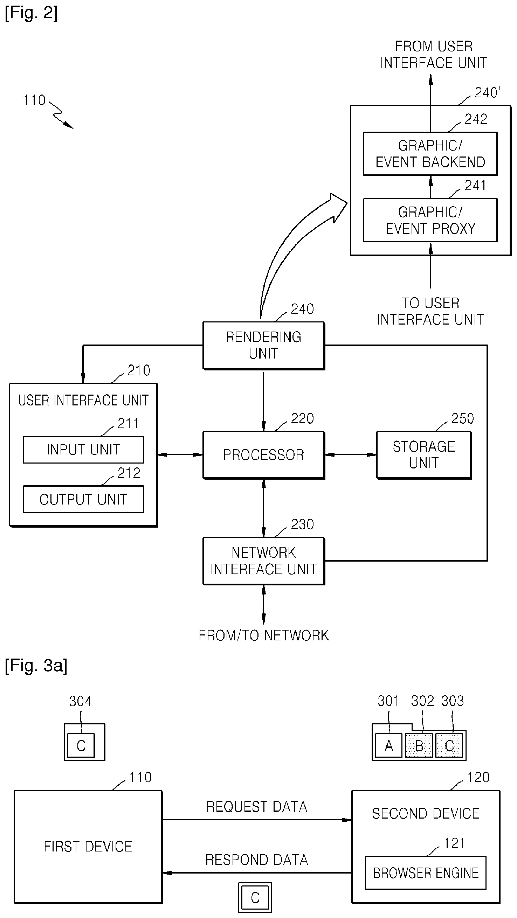

FIG. 2 is a block diagram of the first device of FIG. 1 according to an embodiment of the present invention.

Referring to FIG. 2, the first device 110 may include a user interface unit 210, a processor 220, a network interface unit 230, a rendering unit 240, and a storage unit 250, but is not limited thereto. An input unit 211 and an output unit 212 may be integrated in the user interface unit 210 in FIG. 2, or may be implemented independently. The user may input information, commands, or data through the input unit 211. A signal input or transmitted to the processor 220 through the input unit 211 may be referred to as input information, an input command, an input signal, or input data.

According to an embodiment of the present invention, information input through the input unit 211 may include a request for data based on output from a browser engine and a request for data based on a browsing screen displayed on the output unit 212. When the input and output units 211 and 212 are combined, the request for data based on the output of the browser engine may be entered based on screen displayed on the output unit 212.

For example, these operations may be performed transparently from the perspective of the user, in that the user does not need to know whether there is a browser engine or not in the first device 110, so the user may input a command to request a URL through the input 211 based on screen displayed on the output 212 as in the conventional browsing method. The processor 220 may in turn transmit the command to request the URL to the second device 120 through the network interface unit 230 in a format recognizable to event proxies of the first and second devices 110 and 120.

FIGs. 3A to 3E illustrate interactions, with respect to their browsing screens, between the first and second devices of FIG. 1 according to embodiments of the present invention.

Referring to FIGS. 3A to 3E, input and output signals through the input and output units 211 and 212 of the first device 110, respectively, based on browsing results of the second device 120 are described as follows.

In the example according to FIG. 3A, when a second device 120 performs tabbed browsing 300 where several tabs are provided by the browser engine 121, a request input through the input unit 211 of the first device 110 may be, for example, a request for a tabbed window C 303 that is hidden together with a tabbed window B 302 by the tabbed window 301 on the screen of the second device. In response to the request, a browsing screen 304 corresponding to the tabbed window C 303 may be displayed on the output unit 212 of the first device 110. Data requests and responses between the first and second devices 110 and 120 may be exchanged in the markup language based on a protocol recognizable to both devices 110 and 120.

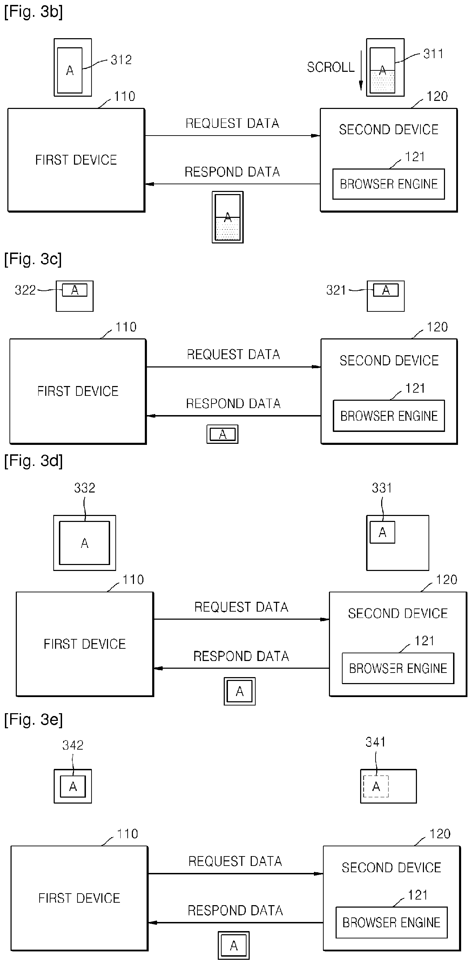

In the example according to FIG. 3B, when a second device 120 performs browsing with the browser engine 121 and displays a browsing screen 311 having a part that needs to be scrolled up or down in order to be viewed, a request input through the input unit 211 of the first device 110 may be a request for full content (or a full web page) that has been browsed by the second device 120. In response to the request, the output unit 212 of the first device 110 may display the full content screen 312.

In the example according to FIG. 3C, when a second device 120 performs browsing with the browser engine 121 and displays a menu screen 321 browsed by the browser engine 121, a request for data based on the browser engine 121 input through the input unit 211 of the first device 110 may be a request for data of the menu screen 321. The menu screen 321 may be referred to as a screen based on information about control items of the second device 120. In response to the request, the output unit 212 of the first device 110 may display the same menu screen 322 as the menu screen 321.

In the example according to FIG. 3D, a request for data based on the browser engine 121, which is input through the input unit 211 of the first device 110 may be a request for a zoomed-in version of a specified area 'A' of a browsing screen of the second device 120 displayed by the browser engine 121. In response to the request, the output unit 212 of the first device 110 may display the resulting screen 332 by expanding the specified area 331. Herein, the first device 110 may send the request for the expansion to the second device 120, considering the extent to which the first device 110 can expand. If the first device 110 sends the request for the expansion to the second device 120 without considering the extent to which it can expand, a response from the second device 120 may exceed the extent that the first device 110 can display the resulting screen 332. As such, when the response from the second device 120 exceeds the extent that the first device 110 can display the resulting screen 332, the first device 110 may modify the response from the second device 120 to be within an extent that the first device 110 can handle, and then display the modified expanded browsing screen 332.

In the example according to FIG. 3E, a request for data based on the browser engine 121, which is input through the input unit 211 of the first device 110, may be a request for a specified area 341 of the browsing screen of the second device 120 displayed by the browser engine 121. The second device 120 may transmit data of the specified area 341 to the first device 110, as shown in FIG. 3D, while marking the specified area 341 to be displayed through the output unit 212 of the first device 110 on the browsing screen of the second device 120. A request based on the browsing screen displayed through the output unit 212, as shown in FIGs. 3A to 3E, may be input through the input unit 211 of the first device 110. When an updated browsing screen is received from the second device 120, the output unit 212 may display the updated browsing screen.

The input unit 211 may be a touch-based interface using a touch panel or a touch screen that generates input signals by detecting respective positions of contacts of a human finger or a stylus pen. The output unit 212, which may also be referred to as a display unit, may be a Liquid Crystal Display (LCD), a Thin Film Transistor Liquid Crystal Display (TFT LCD), an Organic Light-Emitting Diode (OLED), a flexible display, a three-Dimensional (3D) display, an Active-Matrix Organic Light-Emitting Diode (AMOLED), etc. The processor 220 for controlling all functions of the first device 110 may be referred to as a controller, a microprocessor, etc., or as a browser controller according to embodiments of the present invention.

A program for performing the browsing method according to an embodiment of the present invention may be pre-loaded to and operated by the processor 220, or may be stored in the storage unit 250 and then loaded to the processor 220.

The storage unit 250 may store application programs and data required for performing the browsing method according to embodiments of the present invention. The data may contain information to support the request for data based on the browser engine input through the input unit 211. The application programs may be stored in the storage unit 250 in advance, or may be downloaded through the network interface unit 230 and be stored in the storage unit 250. When the programs are downloaded through the network interface unit 230, the application program may be downloaded from the second device 120, or from a separate server.

The network interface unit 230 may include a network backend. The network backend may be based on wired or wireless communication, such as described herein with respect to the communication link 130. The network backend may operate to connect the first and second devices 110 and 120 based on, for example, an IEEE 802.11 standard. The network interface unit 230 is configured to communicate data based on a protocol that can support the difference in standards, if any, between the first and second devices 110 and 120.

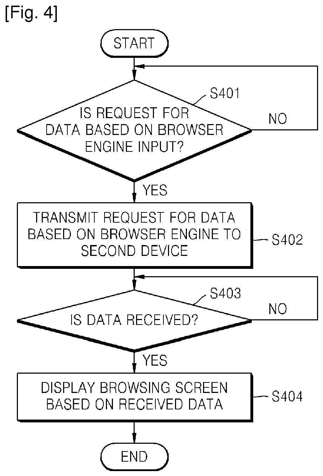

Meanwhile, the processor 220 may operate according to a flowchart illustrated in Fig. 4. FIG. 4 is a diagram illustrating an operational flow chart of a browsing method performed in the first device 110 shown in FIG. 1, according to an embodiment of the present invention.

Referring to FIG. 4, when a request for data based on the browser engine is input through the input unit 211 in step S401, the processor 220 sends a request for the data based on output of the browser engine to the second device 120 through the network interface unit 230, in step S402.

Upon receiving the requested data from the second device 120 through the network interface unit 230, the processor 220 requests the rendering unit 240 to render the received data. Thus, the received data may be defined to be in a data format that is recognizable to the rendering unit 240. For example, the received data may be data defined in a protocol based on a part of or an entire Document Object Model (DOM) tree obtained by parsing markup language based data.

The rendering unit 240 renders the received data to display a browsing screen based on the received data through the output unit 212, in step S404. In order to perform the rendering, the rendering unit 240 is configured as a stack to generate graphics based on the received data and to handle events.

However, if the second device 120 includes a graphic/event proxy for rendering, the rendering unit 240 may include a graphic/event proxy 241 that corresponds to the graphic/event proxy included in the second device 120 and a graphic/event backend 242, as shown in a block 240 of FIG. 2. The graphic/event proxy 241 may be a component, such as, a lightweight wrapper, that can create a graphic/event command (or a graphic/event protocol) recognizable to the graphic/event backend 242 or provide an associated Application Programming Interface (API).

The graphic/event backend 242 may correspond to the stack, which can make graphics based on such a command or protocol created by the graphic/event proxy 241 and handle events. Steps of S402 to S404 of FIG. 4 may be performed by the graphic/ event proxy 241 of the first device 110 and a graphic/event proxy 651, which are described in further detail herein below, according to a protocol that can support differences, if any, in standards between the first and second devices 110 and 120.

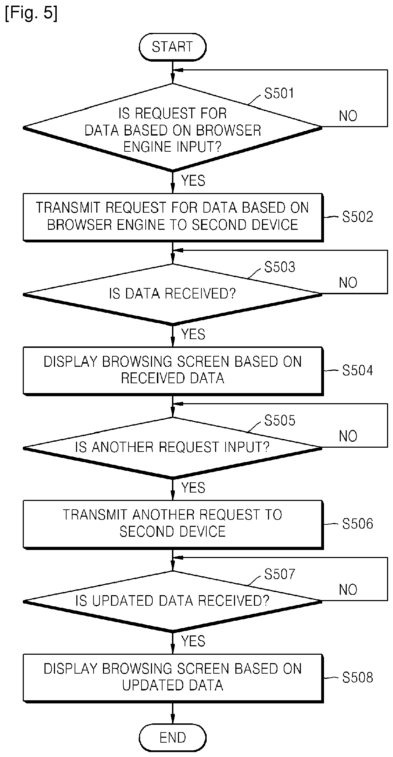

The processor 220 may operate as shown in FIG. 5. FIG. 5 is another example of an operational flow chart of the browsing method performed in the first device of FIG. 1, according to the current embodiment of the present invention, in which operations to be performed according to a request based on a browsing screen displayed through an output unit are added to the flowchart of FIG. 4.

Steps S501 to S504 of FIG. 5 correspond to steps S401 to S404 of FIG. 4. Accordingly, a further description of steps S501 to S504 is omitted for clarity and conciseness.

Referring to FIG. 5, when a request based on the browsing screen displayed through the output unit 212 is input in step S505, the processor 220 forwards the request to the second device 120 through the network interface unit 230 in step S506. When receiving updated data from the second device 120 in step S507, the processor 220 displays an updated browsing screen through the output unit 212 based on the received updated data, in step S508.

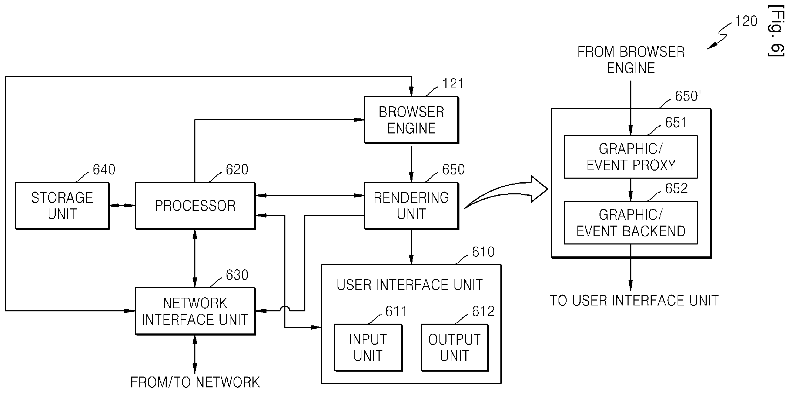

FIG. 6 is a functional block diagram illustrating a configuration of the second device of FIG. 1 according to an embodiment of the present invention.

Referring to FIG. 6, the second device 120 may include a browser engine 121, a user interface unit 610, a processor 620, a network interface unit 630, a storage unit 640, and a rendering unit 650, but is not limited thereto. The user interface unit 610 includes input and output units 611 and 612, which may be configured to be similar to the input and output units 211 and 212 included in the user interface unit 210 of the first device 110 of FIG. 2. However, the input unit 611 may be configured differently than the input unit 211, depending on input signal conditions.

The output unit 612 may be configured differently than the output unit 212, depending on the screen resolution. If screen resolutions of the output units 212 and 612 of the first and second devices 110 and 120, respectively, are not the same, when transmitting data based on the browser engine 121 to the first device 110, the rendering unit 650 of the second device 120 may transmit the data that is adjusted to the screen resolution of the first device 110 through the network interface unit 630, or may transmit the data regardless of the screen resolution of the first device 110 (i.e., without adjusting to the screen resolution of the first device 110).

For example, when screen data having a resolution of 1200 x 600 pixels is transmitted to the first device 110 through the network interface unit 630 of the second device 120, the resolution may be the one that has been requested by the first device 110 when the first device 110 requested the data from the second device 120. If the resolution is not the same as a resolution that has been requested by the first device 110 when the first device 110 requested the data, the resolution may later be adjusted by the first device 110 to the requested resolution.

The rendering unit 650 may include a graphic and/or event proxy 651 and a graphic and/or event backend 652, as shown in FIG. 6. The browser engine 121 parses markup language-based data received through the network interface unit 630 to configure a DOM tree and configures a layout tree based on the configured DOM tree. Then, in response to a request to render a part of or an entire layout tree under control of the processor 620, the graphic and/or event proxy 651 generates a protocol to be recognized by the graphic and/or event backend 652 under control of the processor 620.

The graphic and/or event proxy 651 may be a lightweight wrapper depending on implementations and conditions. When the graphic and/or event proxy 241 of the first device 110 is configured to frequently perform a function based on properties of the first device 110, the graphic and/or event proxy 651 of the second device 120 may be a lightweight wrapper, because the graphic and/or event proxy 651 of the second device 120 may not need to perform the function based on the properties of the first device 110. Conversely, when the graphic and/or event proxy 651 of the second device 120 performs a function based on the properties of the first device 110, the graphic and/or event proxy 241 of the first device 110 may be a lightweight wrapper.

The processor 620 may be referred to as a controller, a microprocessor, etc. for controlling all functions of the second device 120, or may be referred to as a manager for managing the browsing method according to embodiments of the present invention.

The processor 620 may be preloaded with a program for performing the browsing method according to embodiments of the invention, or may load the program stored in the storage unit 640 to perform the browsing method.

The storage unit 640 may store application programs and data required for performing the browsing method according to embodiments of the present invention. The data may contain information that can support a browsing request signal based on the browser engine 121, which is input through the input unit 611. The application programs may be stored in the storage unit 640 in advance, or may be stored in the storage unit 640 by downloading them through the network interface unit 630. When being downloaded through the network interface unit 630, the application programs may be downloaded from an application store server.

The network interface unit 630 may include a network backend. The network backend may be configured to be based on wired or wireless communication, as described above with respect to the communication link 130. The network backend may make a connection between the first and second devices 110 and 120 according to a wireless standard, such as IEEE 802. 11. The network interface unit 630 may be configured to transmit and receive data in a protocol that can support the difference in standards between the first and second devices 110 and 120.

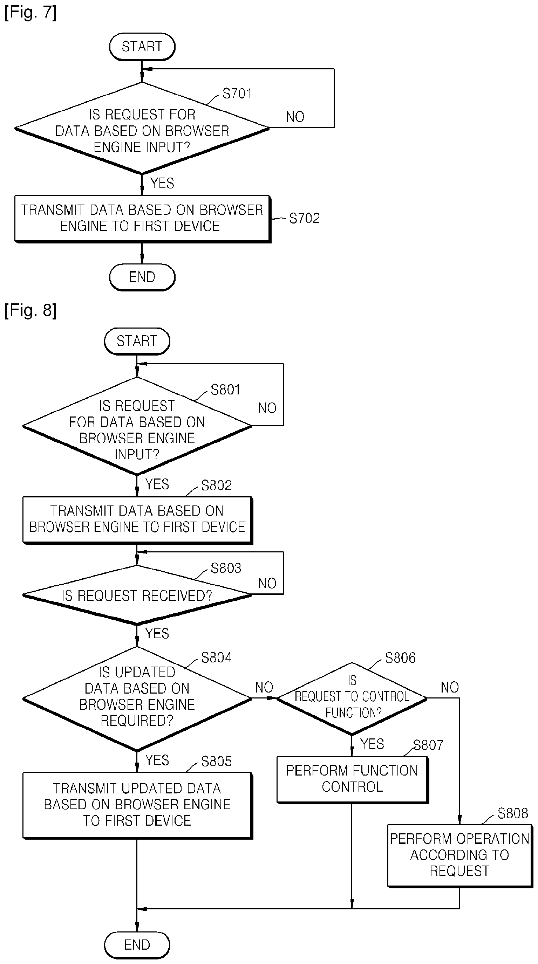

FIG. 7 is a diagram illustrating an operational flow chart of a browsing method performed by a controller in the second device of FIG. 1, according to an embodiment of the present invention, while the first device 110 is operating according to the method of FIG. 4.

Upon receiving a request for data based on a browser engine 121 through the network interface unit 630, in step S701, the processor 620 analyzes the received request, and based on a browsing status in the browser engine 121 in response to the analyzed request, controls the rendering unit 650 to transmit to the first device 110 the data based on the browser engine 121 requested by the first device 110, in step S702.

FIG. 8 is a diagram illustrating an operational flow chart of a browsing method performed by a processor in the second device of FIG. 1, according to an embodiment of the present invention, while the first device 110 is operating according to the method of FIG. 5.

Steps S801 to S802 of FIG. 8 are the same as steps S701 and S702 of FIG. 7. Accordingly, a further description of steps S801 to S802 is omitted for clarity and conciseness.

Referring to FIG, 8, in step S803, upon receiving a signal from the first device 110, the processor 620 analyzes the signal and determines whether to transmit updated data based on updated output of the browser engine 121. For example, when the signal received from the first device 110 is for requesting a hidden part of the screen as shown in FIG. 3B, the processor 632 may determine that transmission of updated data is required in step S804. After determining that updated data needs to be transmitted, the processor 620 transmits the updated data to the first device 110 through the network interface unit 630 in step S805.

However, upon determining that updated data is not required to be transmitted, the processor 620 determines whether the received signal is for controlling a function (e.g., a User Interface (UI) function) of the second device 120 in step S806. For example, if a menu screen as shown in FIG. 3C has been transmitted to the first device 110, a signal for controlling a function of the second device 120 based on the menu screen displayed in the first device 110 may be received from the first device 110.

In addition, when an area corresponding to a screen displayed by the first device 110 has been marked on a screen displayed by the second device 120, a user may input a control signal to control a function of the second device 120 by using the first device 110 while viewing the marked screen displayed in the second device 120.

If the received signal is for controlling a function of the second device 120, the processor 620 may control the function of the second device 120 in step S807. When it is determined in step S806 that the signal is not a signal for controlling a function of
the second device 120, the processor 620 performs an operation that is requested according to the received signal in step S808. The operation may include error handling. More specifically, when the second device 120 cannot process the received signal, the second device 120 may perform error handling for the received signal.

According to embodiments of the present invention, a device that is not equipped with a browser engine may perform browsing operations in conjunction with a device equipped with a browser engine. In particular, as data is transmitted and received using a lightweight protocol such as an X protocol between devices, data that can support differences in standards between devices may be communicated.

The present invention can be embodied as computer-readable codes on a computer-readable storage medium. The computer-readable storage medium is any data storage device that can store data that can be thereafter read by a computer system. Examples of the computer-readable storage medium include a magnetic storage medium (e.g., a Read Only Memory (ROM), floppy disk, hard disk, etc.) and an optical medium (e.g., a Compact Disc ROM (CD-ROM), Digital Versatile Disc (DVD) etc.).

While the present invention has been particularly shown and described with reference to embodiments thereof, it will be understood by those of ordinary skill in the art that various changes in form and details may be made therein without departing from the scope of the present invention as defined by the following claims.

## Claims

1. A browsing method performed by an electronic device (110), the method comprising,
transmitting, to an external device (120) having a browser engine, a first request for data to display a browsing screen based upon a first output generated by the browser engine, the first output comprising a part that is hidden from view on a browsing screen of the external device;
receiving, from the external device, the requested data;
generating, by a graphic/event proxy, a graphic/event command or a graphic/event protocol based on the received data;
generating, by a graphic/event backend, graphics based on the graphic/event command or the graphic/event protocol; and
displaying the browsing screen based on the generated graphics, the displayed browsing screen of the electronic device including the part that is hidden from view on the browsing screen of the external device,
wherein the electronic device (110) is not equipped with a browser engine, and
wherein the received data at the electronic device is based on a protocol that supports differences in standards between the electronic device and the external device.

2. The browsing method of claim 1, further comprising:
transmitting, to the external device (120), a second request for updated data based upon the displayed browsing screen;
receiving, from the external device, the updated data, wherein the updated data is based upon a second output generated by the browser engine in response to a second request; and
displaying an updated browsing screen according to the received updated data.

3. The browsing method of claim 1 or 2, wherein the displayed browsing screen corresponds to a tabbed window screen that is hidden among tabs currently being displayed by the external device (120).

4. The browsing method of claim 1 or 2, wherein the displayed browsing screen corresponds to the browsing screen displayed by the external device (120), such that it includes an area currently displayed by the external device and the part currently hidden by the external device being part of a rendered page that does not currently fit the size of the screen.

5. The browsing method of claim 1 or 2, wherein the displayed browsing screen corresponds to a screen with control items displayed in response to the first request or the second request to the external device (120).

6. The browsing method of claim 1 or 2, wherein the displayed browsing screen corresponds to a screen resulting from zooming in on a part of the browsing screen displayed by the external device (120).

7. The browsing method of claim 1 or 2, wherein the displayed browsing screen corresponds to a marked part of a screen displayed by the external device (120).

8. A computer-readable storage medium having a computer program embodied thereon which, when executed by a computer, cause the computer to carry out the steps of the method of any of the claims 1-7.

9. A device (110) comprising,
a network interface unit (230) for transmitting and receiving data via a network;
an input unit (211) for inputting a request for data based upon a first output generated by a browser engine of an external device (120), the first output comprising a part that is hidden from view on a browsing screen of the external device;
an output unit (212) for outputting a browsing screen; a processor (220) for transmitting the request to the external device through the network interface unit when receiving from the input unit the request for the data to display a browsing screen based on the browser engine, receiving, from the external device, the requested data; and
a rendering unit (240) comprising a graphic/event proxy for generating a graphic/event command or a graphic/event protocol based on the received data, and a graphic/event backend for generating graphics based on the graphic/event command or the graphic/event protocol,
wherein the processor (220) displays, through the output unit (212), the browsing screen based on the generated graphics, the displayed browsing screen of the electronic device including the part that is hidden from view on the browsing screen of the external device and
wherein the device is not equipped with a browser engine, and
wherein the received data at the electronic device is based on a protocol that supports differences in standards between the electronic device and the external device.

10. The device (110) of claim 9, wherein when another request for updated data based upon output of the browser engine generated by the external device (120) based on the displayed browsing screen displayed through the output unit (212) is input through the input unit, the processor (220) transmits the another request to the external device through the network interface unit (230), and displays, through the output unit, an updated browsing screen based on updated data upon receiving the requested updated data.

## Patentansprüche

1. Browsing-Verfahren, das durch eine elektronische Vorrichtung (110) durchgeführt wird, wobei das Verfahren Folgendes umfasst:
Übertragen, zu einer externen Vorrichtung (120) mit einer Browser-Engine, einer ersten Anforderung für Daten zum Anzeigen eines Browsing-Bildschirms basierend auf einer ersten Ausgabe, die durch die Browser-Engine erzeugt wird, wobei die erste Ausgabe einen Teil umfasst, der nicht auf einem Browsing-Bildschirm der externen Vorrichtung sichtbar ist;
Empfangen, von der externen Vorrichtung, der angeforderten Daten;
Erzeugen, durch ein Grafik-/Ereignis-Proxy, eines Grafik-/Ereignis-Befehls oder eines Grafik-/Ereignis-Protokolls basierend auf den empfangenen Daten;
Erzeugen, durch ein Grafik-/Ereignis-Backend, von Grafiken basierend auf dem Grafik-/Ereignis-Befehl oder dem Grafik-/Ereignis-Protokoll; und
Anzeigen des Browsing-Bildschirms basierend auf den erzeugten Grafiken, wobei der angezeigte Browsing-Bildschirm der elektronischen Vorrichtung den Teil beinhaltet, der nicht auf dem Browsing-Bildschirm der externen Vorrichtung sichtbar ist,
wobei die elektronische Vorrichtung (110) nicht mit einer Browser-Engine ausgestattet ist, und wobei die empfangenen Daten an der elektronischen Vorrichtung auf einem Protokoll basieren, das Unterschiede in Standards zwischen der elektronischen Vorrichtung und externen Vorrichtung unterstützt.

2. Browsing-Verfahren nach Anspruch 1, ferner umfassend:
Übertragen, zu der externen Vorrichtung (120), einer zweiten Anforderung für aktualisierte Daten basierend auf dem angezeigten Browsing-Bildschirm;
Empfangen, von der externen Vorrichtung, der aktualisierten Daten, wobei die aktualisierten Daten auf einer zweiten Ausgabe basieren, die durch die Browser-Engine als Reaktion auf eine zweite Anforderung erzeugt wird; und
Anzeigen eines aktualisierten Browsing-Bildschirms gemäß den empfangenen aktualisierten Daten.

3. Browsing-Verfahren nach Anspruch 1 oder 2, wobei der angezeigte Browsing-Bildschirm einem Bildschirm eines mit einem Tab versehenen Fensters entspricht, der zwischen Tabs verborgen ist, die gegenwärtig durch die externe Vorrichtung (120) angezeigt werden.

4. Browsing-Verfahren nach Anspruch 1 oder 2, wobei der angezeigte Browsing-Bildschirm dem Browsing-Bildschirm entspricht, der durch die externe Vorrichtung (120) angezeigt wird, sodass er einen Bereich, der gegenwärtig durch die externe Vorrichtung angezeigt wird, und den Teil, der gegenwärtig durch die externe Vorrichtung verborgen wird, der Teil einer wiedergegebenen Seite ist, die gegenwärtig nicht in die Größe des Bildschirms passt, beinhaltet.

5. Browsing-Verfahren nach Anspruch 1 oder 2, wobei der angezeigte Browsing-Bildschirm einem Bildschirm mit Steuerelementen entspricht, die als Reaktion auf die erste Anforderung oder die zweite Anforderung zu der externen Vorrichtung (120) angezeigt werden.

6. Browsing-Verfahren nach Anspruch 1 oder 2, wobei der angezeigte Browsing-Bildschirm einem Bildschirm entspricht, der aus einem Heranzoomen an einen Teil des Browsing-Bildschirms, der durch die externe Vorrichtung (120) angezeigt wird, resultiert.

7. Browsing-Verfahren nach Anspruch 1 oder 2, wobei der angezeigte Browsing-Bildschirm einem markierten Teil eines Bildschirms entspricht, der durch die externe Vorrichtung (120) angezeigt wird.

8. Computerlesbares Speichermedium mit einem darauf umgesetzten Computerprogramm, das bei Ausführung durch einen Computer bewirkt, dass der Computer die Schritte des Verfahrens nach einem der Ansprüche 1-7 ausführt.

9. Vorrichtung (110), umfassend:
eine Netzwerkschnittstelleneinheit (230) zum Übertragen und Empfangen von Daten über Netzwerk;
eine Eingabeeinheit (211) zum Eingeben einer Anforderung für Daten basierend auf einer ersten Ausgabe, die durch einen Browser-Engine einer externen Vorrichtung (120) erzeugt wird, wobei die erste Ausgabe einen Teil umfasst, der nicht auf einem Browsing-Bildschirm der externen Vorrichtung sichtbar ist;
eine Ausgabeeinheit (212) zum Ausgeben eines Browsing-Bildschirms; einen Prozessor (220) zum Übertragen der Anforderung über die Netzwerkschnittstelleneinheit zu der externen Vorrichtung, wenn die Anforderung für die Daten zum Anzeigen eines Browsing-Bildschirms basierend auf der Browser-Engine von der Eingabeeinheit empfangen wird, Empfangen, von der externen Vorrichtung, der angeforderten Daten; und
eine Wiedergabeeinheit (240), die ein Grafik-/Ereignis-Proxy zum Erzeugen eines Grafik-/Ereignis-Befehls oder eines Grafik-/Ereignis-Protokolls basierend auf den empfangenen Daten und ein Grafik-/Ereignis-Backend zum Erzeugen von Grafiken basierend auf dem Grafik-/Ereignis-Befehl oder dem Grafik-/Ereignis-Protokoll umfasst,
wobei der Prozessor (220), über die Ausgabeeinheit (212), den Browsing-Bildschirm basierend auf den erzeugten Grafiken anzeigt, wobei der angezeigte Browsing-Bildschirm der elektronischen Vorrichtung den Teil beinhaltet, der nicht auf dem Browsing-Bildschirm der externen Vorrichtung sichtbar ist, und
wobei die Vorrichtung nicht mit einer Browser-Engine ausgestattet ist, und
wobei die empfangenen Daten an der elektronischen Vorrichtung auf einem Protokoll basieren, das Unterschiede in Standards zwischen der elektronischen Vorrichtung und der externen Vorrichtung unterstützt.

10. Vorrichtung (110) nach Anspruch 9, wobei, wenn eine andere Anforderung für aktualisierte Daten basierend auf einer Ausgabe der Browser-Engine, die durch die externe Vorrichtung (120) basierend auf dem über die Ausgabeeinheit (212) angezeigten Browsing-Bildschirm erzeugt wird, über die Eingabeeinheit eingegeben wird, der Prozessor (220) die andere Anforderung über die Netzwerkschnittstelleneinheit (230) zu der externen Vorrichtung überträgt und, über die Ausgabeeinheit, einen aktualisierten Browsing-Bildschirm basierend auf aktualisierten Daten nach dem Empfangen der angeforderten aktualisierten Daten anzeigt.

## Revendications

1. Procédé de navigation exécuté par un dispositif électronique (110), le procédé comprenant
la transmission à un dispositif externe (120), comportant un moteur de navigation, d'une première demande de données pour afficher un écran de navigation sur la base d'une première sortie générée par le moteur de navigation, la première sortie comprenant une partie masquée sur un écran de navigation du dispositif externe ;
la réception, du dispositif externe, des données demandées ;
la génération, par un proxy de graphiques/d'événements, d'une commande de graphiques/d'événements ou d'un protocole de graphiques/d'événements sur la base des données reçues ;
la génération, par un serveur dorsal de graphiques/d'événements, de graphiques sur la base de la commande de graphiques/d'événements ou du protocole de graphiques/d'événements ; et
l'affichage de l'écran de navigation en fonction des graphiques générés, l'écran de navigation affiché du dispositif électronique incluant la partie masquée sur l'écran de navigation du dispositif externe,
le dispositif électronique (110) n'étant pas équipé d'un moteur de navigation, et
les données reçues au niveau du dispositif électronique étant basées sur un protocole qui prend en charge des différences de normes entre le dispositif électronique et le dispositif externe.

2. Procédé de navigation selon la revendication 1, comprenant en outre :
la transmission, au dispositif externe (120), d'une deuxième demande de données mises à jour sur la base de l'écran de navigation affiché ;
la réception, du dispositif externe, des données mises à jour, les données mises à jour étant basées sur une deuxième sortie générée par le moteur de navigation en réponse à une deuxième demande ; et
l'affichage d'un écran de navigation mis à jour en fonction des données mises à jour reçues.

3. Procédé de navigation selon la revendication 1 ou 2, dans lequel l'écran de navigation affiché correspond à un écran de fenêtre à onglets masqué parmi des onglets actuellement affichés par le dispositif externe (120) .

4. Procédé de navigation selon la revendication 1 ou 2, dans lequel l'écran de navigation affiché correspond à l'écran de navigation affiché par le dispositif externe (120), de sorte qu'il comprenne une zone actuellement affichée par le dispositif externe et la partie actuellement masquée par le dispositif externe étant une partie d'une page restituée qui ne correspond pas actuellement à la taille de l'écran.

5. Procédé de navigation selon la revendication 1 ou 2, dans lequel l'écran de navigation affiché correspond à un écran comportant des éléments de commande affichés en réponse à la première demande ou à la deuxième demande faite au dispositif externe (120).

6. Procédé de navigation selon la revendication 1 ou 2, dans lequel l'écran de navigation affiché correspond à un écran résultant d'un zoom avant effectué sur une partie de l'écran de navigation affiché par le dispositif externe (120).

7. Procédé de navigation selon la revendication 1 ou 2, dans lequel l'écran de navigation affiché correspond à une partie marquée d'un écran affiché par le dispositif externe (120).

8. Support de stockage lisible par ordinateur sur lequel est incorporé un programme informatique qui, lorsqu'il est exécuté par un ordinateur, ordonne à l'ordinateur d'exécuter les étapes du procédé selon l'une quelconque des revendications 1 à 7.

9. Dispositif (110) comprenant :
une unité d'interface réseau (230) destinée à transmettre et recevoir des données via un réseau ;
une unité d'entrée (211) destinée à entrer une demande de données sur la base d'une première sortie générée par un moteur de navigation d'un dispositif externe (120), la première sortie comprenant une partie masquée sur un écran de navigation du dispositif externe ;
une unité de sortie (212) destinée à délivrer en sortie un écran de navigation ; un processeur (220) destiné à transmettre la demande au dispositif externe via l'unité d'interface réseau lors de la réception, de l'unité d'entrée, de la demande des données pour afficher un écran de navigation sur la base du moteur du navigation, recevoir, du dispositif externe, les données demandées ; et
une unité de restitution (240) comprenant un proxy de graphiques/d'événements destiné à générer une commande de graphiques/d'événements ou un protocole de graphiques/d'événements sur la base des données reçues, et un serveur dorsal de graphiques/d'événements destiné à générer des graphiques sur la base de la commande de graphiques/d'événements ou du protocole de graphiques/d'événements,
le processeur (220) affichant, via l'unité de sortie (212), l'écran de navigation sur la base des graphiques générés, l'écran de navigation affiché du dispositif électronique incluant la partie masquée sur l'écran de navigation du dispositif externe et
le dispositif n'étant pas équipé d'un moteur de navigation, et
les données reçues au niveau du dispositif électronique étant basées sur un protocole qui prend en charge les différences de normes entre le dispositif électronique et le dispositif externe.

10. Dispositif (110) selon la revendication 9, dans lequel lorsqu'une autre demande de données mises à jour sur la base de la sortie du moteur de navigation générée par le dispositif externe (120) sur la base de l'écran de navigation affiché via l'unité de sortie (212), est entrée via l'unité d'entrée, le processeur (220) transmet l'autre demande au dispositif externe via l'unité d'interface réseau (230) et affiche, via l'unité de sortie, un écran de navigation mis à jour sur la base des données mises à jour lors de la réception des données mises à jour demandées.
